# EUROPEAN PATENT SPECIFICATION

(11) **EP 3 588 714 B1**
(45) Date of publication and mention of the grant of the patent: **10.05.2023**
(21) Application number: 18179139.3
(22) Date of filing: 21.06.2018
(51) Int. Cl.: H02G 15/064, H01R 13/53

(54) **HV CABLE TERMINATION DEVICE**
HV-KABELABSCHLUSSVORRICHTUNG
DISPOSITIF DE TERMINAISON DE CÂBLE À HAUTE TENSION

(43) Date of publication of application: 01.01.2020
(73) Proprietor: Tyco Electronics Raychem GmbH, 85521 Ottobrunn (DE)
(72) Inventor: KEHL, Ladislaus, 81739 München (DE)
(74) Representative: Grünecker Patent- und Rechtsanwälte PartG mbB

(56) References cited:
- EP-A1- 0 683 555
- EP-A1- 0 732 791
- EP-A1- 3 148 027
- WO-A1-2016/012918
- US-A1- 2014 076 624
- US-A1- 2017 287 601

## Description

The present invention relates to a high-voltage (HV) dry type cable termination device.

HV cable terminations are typically filled with a fluid insulating medium which serves as an electrical insulator and as a cooling medium for the cable located inside the termination.

This kind of termination design has been well accepted on the market for a long time already, although there are certain disadvantages to be taken into account. One of them is related to the sealing system which ensure safe and maintenance-free operation over the whole expected service time of 30 years. The other problem is that insulating oils are sensitive to moisture ingress. Their electrical performance deteriorates quickly in the presence of moisture specifically at low temperatures. Condensation can lead to serious damage of the terminations and even violent shattering of the housing.

Dry type terminations have been launched by several manufacturers in the past but none of them was really successful so far for different reasons. Costs are typically high or installation is difficult. Some require a change of the support structure which enhances the expenditure to use this design. On the other hand, there is a clear trend towards dry type terminations because they are expected to be more reliable and failsafe.

For instance, published patent application US 2014/076624 A1 discloses a cable termination device of the dry type, for terminating a high voltage cable, including an insulator housing with a first end and a second end and having a hollow interior, and which second end has an opening for insertion of a high voltage cable. The cable termination device further includes a stress controller device located inside the insulator housing and adapted to be mounted on a high voltage cable, an end cap located at the first end of the insulator housing and provided with an external electrical connection means, and an electrically insulating gel filling at least part of the hollow interior of the insulator housing and surrounding at least part of the stress controller device. Further, the stress controller device is provided with a first and a second deflector arrangement for controlling an electric field.

An advantage with having two deflectors on the stress controller device is that the stress controller device may be made shorter than a conventional conical stress controller device having only one deflector, and that this it is less complicated to manufacture than the much longer conventional conical stress controller devices. It is also easier to insert the cable when the stress controller device is shorter. Another advantage is that the provision of two deflector arrangements makes it possible to concentrate the control of the electric field to the region between the two deflector arrangements.

The thermal balance within the HV cable termination is a critical issue. Investigation revealed that when the radial heat dissipation of the HV cable is restrained within the termination, the cable will heat up beyond the cable insulation's withstand capability. The overheating is most critical with cables having aluminium conductors of small cross-sections. The reason is the specified ampacity of the cable and the resulting power losses generated within the cable (the power losses start at about 37 W per meter for a 300 m² aluminium cable and go up to about 45 W per meter for 2000 mm² cable). The specified ampacity of a cable is mainly governed by the thermal balance of the cable rather than by its conductor cross-section. Heat dissipation is depending on the available surface which is proportional to the cable's diameter. As the diameter does not change very much, the specified power losses do not change much either.

Within the cable termination, the direction of the heat flow changes significantly. Heat flowing in axial directions towards the end of the cable adds to the radial component, which, however, may be reduced or even completely suppressed, as with the dry type design proposed according to the present invention.

Without radial heat dissipation it is the cable's conductor carrying most of the power losses from the place, where they are generated, to the top of the termination. The thermal resistance of the conductor is proportional to its cross-section, which is proportional to the square of its diameter. As a result, the temperature gradient in axial direction is smaller for larger cables. Small cables, however, will require additional paths for the heat flow in order to maintain moderate cable insulation temperatures. An additional heatsink pipe can be used to improve the thermal performance of the termination. Its design is crucial for the thermal balance within a termination, especially because small cable sizes require better bypass for the heat flow than larger cables.

Typically, the dielectric stress at the end of metallic connections within terminations (i.e. in the existing dry type outdoor termination developed by the applicant but also in commonly available terminations for switch gears) is screened by means of metallic deflector governing the end of the stress cone completely. Since they are fully embedded in a rigid socket with a wide opening to receive the complete cable lug, they are quite large in size.

EP0683555 A1 discloses a dry terminal for an electric cable. In a terminal for a high-voltage electric cable, devoid of insulating oil or deformable fillers, a stiff tubular element provided with at least one conductive tubular portion electrically connected to the upper end portion of the bare conductor is disposed about the insulating layer of the cable from which the semiconductive screen has been removed. A ribbed coating of elastomeric material is fitted on the tubular element. The stiff tubular element and the conductive portion rest on an insulating body providing electric field control means at its inside, which means is disposed about the cable starting from the area where the screen has been removed. The tubular element and the conductive portion form a screen and a structure designed to withstand the cable weight and the transverse forces

There is still a need for a termination device that is of small size, long-term stable and safe, at the same time being installed easily and cost efficient.

This objective is solved by a high voltage cable termination device according to independent claim 1. Advantageous embodiments of the present invention are the subject matter of the dependent claims.

According to the present invention, a cable termination device for being mounted at a cable is provided, the termination device comprising all the features defined in claim 1, including the following:
an insulator housing with a first end and a second end, and
a stress control device,
wherein the stress control device comprises a cone and is provided with a first deflector element and a second deflector element for controlling an electric field, the first deflector element and the second deflector element being formed as separate parts,
wherein the stress control device is configured to be located in the insulator housing and to be installed at the cable, and
wherein, when the stress control device is installed at said cable, said cone is parallel to the cable, and the beaked end of said cone points toward the first end of the insulator housing.

By moving the second deflector element from the socket part it is easily possible to reduce its diameter since it can be arranged much closer to the cables insulation surface.

According to the present invention, the stress cone including its upper deflector part is of conical shape. The conical shape provides the required creepage length along the interface between socket and stress cone from the deflector connected to the high voltage down to the deflector connected to the cable ground layer. At the same time, it provides the beneficial range taking capability. The range taking has to be taken into account when designing the upper deflector since the insertion length of the stress cone is depending on the cable size. For small cables the stress cone is inserted further compared to an installation on the large size cable because the elastic material expands less on the small cable. In the first case it can be made sure that the curved shape of the upper deflector is still exposed enough to effectively control the stress. In the latter case it is ensured that the remaining overlap between the first and second deflector part is still sufficient. This case specifies the minimum length of the deflector.

By separating the stress control deflectors into two separate parts it is possible to keep the overall dynamic outer diameter of the stress control members low.

In order to benefit from existing designs the shape of the stress cone should be similar to the angle used with existing designs. If done that way the variation found positions less than 30 mm for application range of approximately 14 mm in diameter over cables insulation.

According to advantageous embodiments of the present invention, an outer surface of the insulator housing comprises an insulating material.

According to the present invention, inside the insulator housing a metal pipe is fixed, whereby the metal pipe extends from the first end of the insulator housing to a point between the first end and second end of the insulator housing. Such a metal pipe acts as a heatsink for dissipating heat losses. For instance, the metal pipe may at least partly be fabricated from aluminium.

The metal pipe is designed in a way to accommodate for all the cable sizes for which the insulators is designed for (one-size-fits-all). At the same time, thermal coupling between the metal pipe and the cable surface is kept sufficiently high to protect even the smallest cable from overheating. The smallest cable size represents the most critical case with respect to some of the performance of the termination, as the heat flowing in axial direction is governed by the cross-section of the cable's conductor. The bypass provided by the heatsink pipe therefore requires a suitable thermal coupling between the cable and the heatsink pipe. The heat flow by conduction via the enclosed air is, however, too low to provide the necessary level of thermal coupling.

According to the present invention, a space is provided between the inner surface of the insulator housing and the outer surface of the metal pipe. Advantageously, the space between the inner surface of the insulator housing and the outer surface of the metal pipe is filled with an electrically insulating foam. This solution has the advantage that the risk of an internal electrical breakdown within the space between the metal pipe, the inner wall of the insulator housing, and the integrated socket can be reduced. The foam may for instance be a polyurethane foam. Such a polyurethane foam is lightweight and even absorbs humidity which may accidentally penetrate into the termination during the service life of 30 years.

According to the present invention, a socket is integrated in a part of the insulator housing which is adjacent to the second end of the insulator housing. According to the invention, the relevant deflector is separated into two parts where a major part is relocated to the top end of the stress cone. The other part is still located within the socket but reduced in size compared to conventional arrangements, as it does not need to overlap the end of the stress cone anymore.

In particular, a part of the inner volume of the socket forms a cylinder and another part of the inner volume of the socket forms a cone, wherein the end with the smaller diameter points toward the metal pipe.

The socket may be fabricated from any suitable elastic material, for instance, the socket comprises ethylene propylene diene monomer (EPDM) or silicone.

Advantageously, the metal pipe and the socket are formed to insert a peripheral end of the cable.

According to the present invention, the first deflector element and the stress deflector of the socket overlap, wherein an inner surface of the conical part of the socket and the second deflector element form a critical interface and overlap when the cable is fully inserted into the cable termination device. Thereby, the stress cone's diameter can be reduced.

In order to further improve the thermal performance of the termination, the metal pipe may be treated with a coating to increase absorption of heat radiation. In particular, the coating is chosen with a high emission rate, especially for IR radiation. Heat flow based on IR radiation is quite effective at higher temperatures and less sensitive to distance between the emitter and absorber. The medium, which is the preferred material for the heatsink pipe, is, however, not absorbing IR radiation very well but there is a way to improve the absorption coefficient significantly by anodizing or applying a thin layer of paint. For instance for solar panels, special paints and coatings are available which offer a relatively high absorption rate for solar light of close to and even exceeding 90% but still keeping the emission rate below 50%. Some coatings even offer less than 10% emission rate. The inventors of the present invention have found that by anodizing the inner surface of the aluminium tube, it is possible to effectively cool the cable within the termination. The additional costs for anodizing a heatsink pipe are lower than taking alternative measures for cooling the cable.

However, it is clear for a person skilled in the art that also other preferably black coating layer materials may be suitable for treating the metal pipe. For instance HiE-Coat^{™} 840-M made by Aremco, "Ultra Black", "Fractal Black", "Metal Velvet" made by Acktar, Cerablak HTP made by Applied Thin Films may be used. It is noted that for some of these coatings, a particular surface layer, e. g. copper, is required.

Polyethylene (PE), commonly used as cable insulation material, has an emissivity exceeding 90% (data sheets indicate 92%). Therefore, no further coatings are required to improve cooling of the cable.

The invention has a number of advantages. First, there will be improved heat dissipation for a wider range of cable sizes due to an enhanced heat flow by IR radiation. Second, there will be low dielectric stress along the outer surface of insulator due to a small outer diameter of the stress cone deflector. Third, it will consist of cost-efficient components and facilitate easy installation. Fourth, it will allow for a common but flexible installation procedure (installation on ground and subsequent lifting into the final position is easily achievable). Fifth, it consists of commonly used components, and no special tools are required for installation. Sixth, the invention will require only a short cable preparation length (similar to plug-in type switchgear terminations). Seventh, the insulator assembly (housing, socket and heatsink pipe) fits a wide range of cable sizes. Finally, there is no free gas volume left in the termination.

In the lower part of the insulator a socket is integrated. The inner volume of the socket comprises a part with conical shape, wherein the end with the smaller diameter points toward the metal pipe. The socket can be made of EPDM or silicone. The cable is configured to be inserted into the metal pipe and the socket such that the conical shape of the stress deflector matches the conical shape of the inner volume of the socket. The invention can be applied to dry type, self supporting cable terminations, and improves heat dissipation in electrical equipment.

The accompanying drawings are incorporated into and form a part of the specification to illustrate an advantageous embodiment of the present invention. These drawings together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. Further features and advantages will become apparent from the following more particular description of the various embodiments of the invention, as illustrated in the accompanying drawings, in which like references refer to like elements, and wherein:
- **Fig. 1**: shows a partly exploded and opened view of a HV cable termination device according to an embodiment of the present invention;
- **Fig. 2**: shows a detail of Fig. 1;
- **Fig. 3**: shows a further detail of the HV cable termination device according to the present invention.

The present invention will now be described in more detail referring to the Figures.

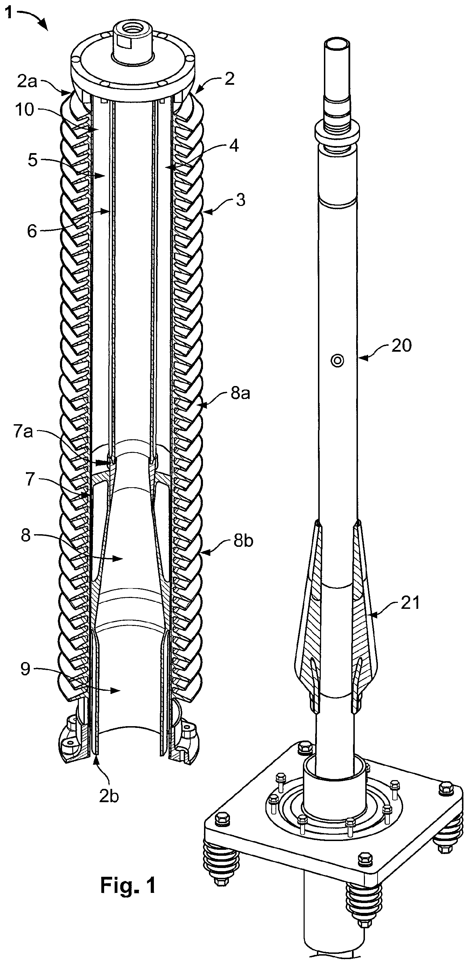

Figure 1 shows a HV cable termination device 1 according to the present invention, an insulator housing 2 and a cable 20 according to an advantageous embodiment of the invention. The insulator housing 2 comprises an outer surface 3 made of insulating material, contains a heat pipe 5 made of aluminium and treated with a coating which increases absorption of heat radiation. The space between the outer surface 6 of the heat pipe and the inner surface 4 of the insulator is filled with PU foam. In the lower part of the insulator housing 2, a socket 7 resides which has a deflector 7a being in contact with the heat pipe 5.

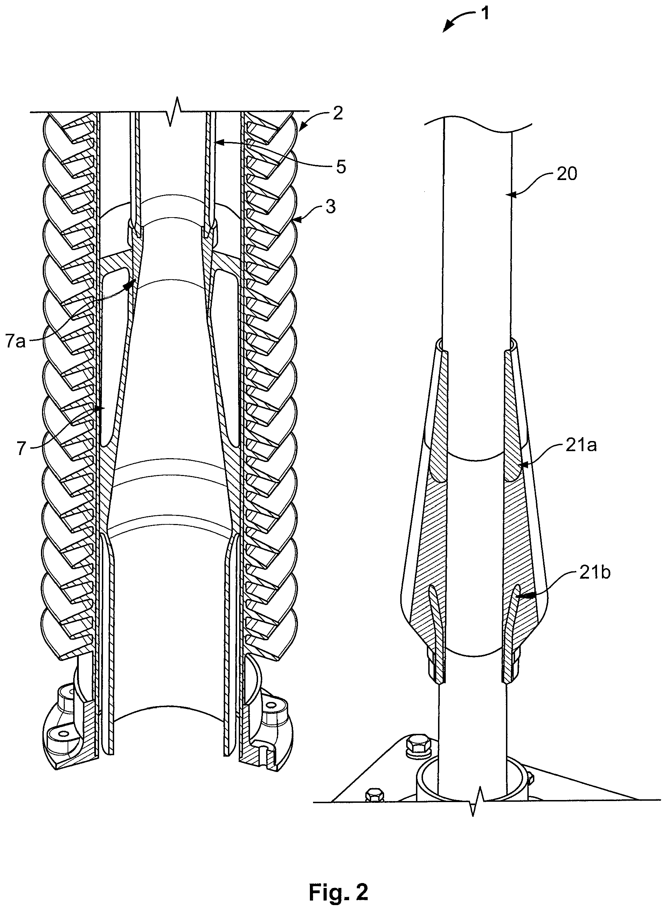

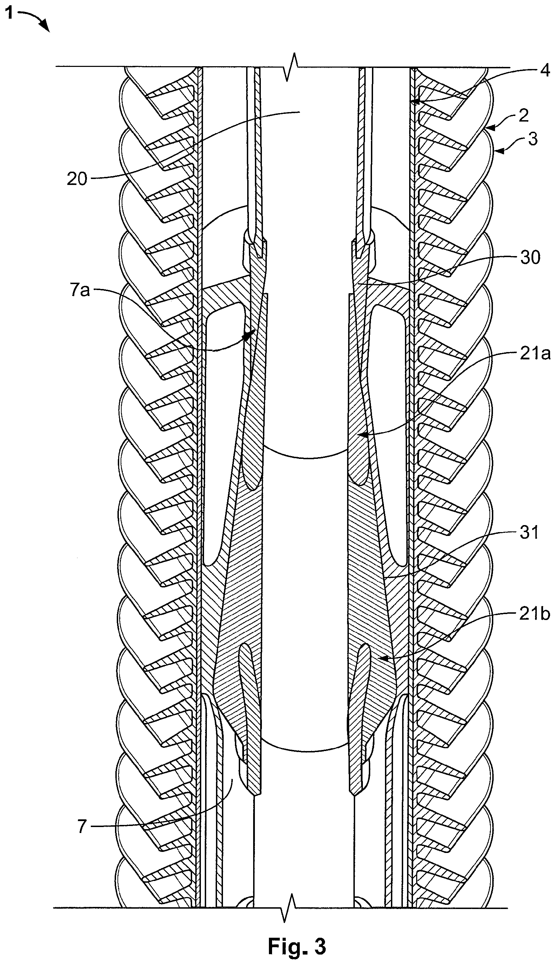

Figure 2 shows the cable with a stress deflector 21. The stress deflector 21 comprises a two-part plate which forms an obtuse angled triangle wherein the long side of the triangle is attached to the cable. The stump angle of the triangle formed by said plate of the stress control device is located in the lower half of the two-part plate and points away from the cable. The most beaked angle of said plate of the stress control device points toward the upper end of the housing. Of the two parts forming said plate, the upper part comprising said most beaked angle forms a first stress cone deflector element 21a and the lower part forms a second deflector element 21b. The upper stress cone deflector 21a is configured to be inserted into the heat pipe, and the lower deflector 21b is configured to be inserted into the conical part of the socket 7 such that the upper stress cone deflector 21a of the cable and the deflector 7a of the socket overlap 30, and the inner surface of the conical part of the socket 7 and the lower part of the deflector 21 of the cable form a critical interface 31 (Figure 3).

In summary, with the termination device according to the present invention, the following challenging aspects can be dealt with:
1) The lower end of the heatsink pipe is equipped with deflectors to control the electrical stress in this area.
2) The outer diameter of the stress control deflectors is kept as low as possible in order to reduce the dielectric stress on the insulator surface.
3) The heatsink pipe is designed in a way to accommodate for all the cable sizes for which the insulator is designed for (one-size-fits-all). At the same time thermal coupling between the heatsink pipe and the cable surface is kept sufficiently high to protect even the smallest cable from overheating.

In particular, by separating the stress control deflectors at the end of the heat pipe into two separate parts it is possible to keep the overall dynamic outer diameter of the stress control members low.

Typically, the dielectric stress at the end of metallic connections within terminations (i.e. in existing dry type outdoor terminations) is screened by means of a metallic deflector covering the end of the stress cone completely. Since they are fully embedded in a rigid socket with a wide opening to receive the complete stress, they are quite large in size.

According to the present invention, the relevant deflector is separated into two parts where a major part is relocated to the top end of the stress cone. The other part is still located within the socket, but reduced very much in size as it does not need to overlap the end of the stress cone anymore.

By moving the second part of the stress cone it is easily possible to reduce its diameter since it can be arranged much closer to the cable's insulation surface.

The transition from the stress cone's deflector to the socket's deflector can be realized in an uncomplicated manner. The deflector parts are shaped according to the relevant shape of the remaining stress cone and socket, respectively. There is actually no radius required for the transition between both but for ease of manufacturing a slight radius is recommended to introduce on the socket side. This, however, will not increase overall diameter of the deflector combination since the part integrated into the stress cone will still be slightly larger.

According to the present invention, the stress cone including its upper deflector part is of a conical shape similar to the stress cones used with switchgear terminations. The shape provides the required creepage length along the interface between circuit and stress cone from the deflector connected to the high voltage down to the deflector connected to the cable's ground layer. At the same time, it provides a beneficial range taking capability. The range taking has to be taken into account when designing the upper deflector, since the insertion length of the stress cone is depending on the cable size. For small cables, the stress cone is inserted further compared to an installation on the large size cable (there occurs less expansion on the small cable).

In the first case, it can be made sure that the curved shape of the upper deflector is still exposed enough to effectively control the stress. In the latter case, it is ensured that the remaining overlap between the first and second deflector part is still sufficient this case specifies the minimum length of the deflector.

At least some of the following advantages can be achieved by embodiments of the present invention: An improved heat dissipation can be achieved for a wider range of cable sizes due to an enhanced heat flow by infrared radiation. A low dielectric stress can be ensured along the outer surface of the insulator due to a smaller outer diameter of the stress cone deflector.

All components are cost efficient and easy to install. The installation procedure is well established, but also flexible. For instance, an installation on ground may be performed and a subsequence lifting into the final position is easily achievable. The components are commonly used and no special tools are required for fabrication and assembly. The length of cable that has to be prepared before attaching the termination is short, similar to plug-in type switchgear terminations. The insulator assembly comprising the housing, the socket and the heatsink pipe fits a wide range of cable sizes. Finally, no free volume is left in the termination.

**Reference numerals**

| **Reference numeral** | **Description** |
|---|---|
| 1 | Cable connection |
| 2 | Insulator housing |
| 2a | Upper end of insulator housing |
| 2b | Lower end of insulator housing |
| 3 | Outer surface of insulator housing |
| 4 | Inner surface of insulator housing |
| 5 | Heat sink pipe |
| 6 | Outer surface of heat sink pipe |
| 7 | Socket |
| 7a | Socket deflector |
| 8 | Conical part of inner socket volume |
| 8a | Upper end of conical part of inner socket volume |
| 8b | Lower end of conical part of inner socket volume |
| 9 | Cylindrical part of inner socket volume |
| 10 | Foam filling |
| 20 | High voltage cable with extruded semicon |
| 21 | Stress cone |
| 21a | Upper stress cone deflector |
| 21b | Lower deflector |
| 30 | Overlapping deflectors |
| 31 | Critical interface |

## Claims

1. Cable termination device for being mounted at a cable (20), the cable termination device (1) comprising:
an insulator housing (2) with a first end (2a) and a second end (2b), and
a stress control device (21),
wherein the stress control device (21) comprises a cone and is provided with an upper deflector element (21a) and a lower deflector element (21b) for controlling an electric field, the upper deflector element (21a) and the lower deflector element (21b) being formed as separate parts,
wherein the stress control device (21) is configured to be located in the insulator housing (2) and to be installed at the cable (20), and
wherein, when the stress control device (21) is installed at said cable (20), said cone (21) is parallel to the cable, and the beaked end of said cone (21) points toward the first end (2a) of the insulator housing (2),
wherein inside the insulator housing (2) a metal pipe (5) is fixed, whereby the metal pipe (5) extends from the first end (2a) of the insulator housing (2) to a point between the first end (2a) and second end (2b) of the insulator housing (2),
wherein a socket (7) is integrated in a part of the insulator housing (2) which is adjacent to the second end (2b) of the insulator housing (2), said socket (7) comprising a conical part (8) and a socket stress deflector (7a), the socket stress deflector (7a) being in contact with the metal pipe (5),
wherein the upper deflector element (21a) and the stress deflector (7a) of the socket (7) overlap, and wherein an inner surface of the conical part (8) of the socket (7) and the lower deflector element (21b) form a critical interface (31) and overlap when the cable (20) is fully inserted into the cable termination device (1).

2. Cable termination device (1) according to claim 1, wherein a space is provided between the inner surface (4) of the insulator housing (2) and the outer surface (6) of the metal pipe (5).

3. Cable termination device (1) according to claim 2, wherein the space between the inner surface (4) of the insulator housing (2) and the outer surface (6) of the metal pipe (5) is filled with an electrically insulating foam (10).

4. Cable termination device (1) according to claim 3, wherein the electrically insulating foam (10) is polyurethane foam.

5. Cable termination device (1) according to one of the claims 1 to 4, wherein a part of the inner volume of the socket (7) forms a cylinder (9) and another part of the inner volume of the socket (7) forms the conical part (8), wherein an end with the smaller diameter (8a) points toward the metal pipe (5).

6. Cable termination device (1) according to one of the claims 1 to 5, wherein the socket (7) comprises ethylene propylene diene monomer (EPDM).

7. Cable termination device (1) according to one of the claims 1 to 5, wherein the socket (7) comprises silicone.

8. Cable termination device (1) according to one of the preceding claims, wherein the metal pipe (5) and the socket (7) are formed to insert a peripheral end of the cable (20).

9. Cable termination device (1) according to claim 3, wherein the metal pipe (5) is formed as a heat sink.

10. Cable termination device (1) according to one of the preceding claims, wherein the metal pipe (5) is made of aluminium.

11. Cable termination device (1) according to one of the preceding claims, wherein the metal (5) pipe is treated with a coating to increase absorption of heat radiation.

## Patentansprüche

1. Kabelabschluss-Vorrichtung zum Montieren an einem Kabel (20), wobei die Kabelabschluss-Vorrichtung (1) umfasst:
ein Isolier-Gehäuse (2) mit einem ersten Ende (2a) und einem zweiten Ende (2b), sowie eine Spannungssteuerungs-Vorrichtung (21),
wobei die Spannungssteuerungs-Vorrichtung (21) einen Konus umfasst und mit einem oberen Ablenkelement (21a) sowie einem unteren Ablenkelement (21b) zum Steuern eines elektrischen Feldes versehen ist,
wobei das obere Ablenkelement (21a) und das untere Ablenkelement (21b) als separate Teile ausgebildet sind,
die Spannungssteuerungs-Vorrichtung (21) so ausgeführt ist, dass sie in dem Isolier-Gehäuse (2) angeordnet und an dem Kabel (20) zu installieren ist, und
wenn die Spannungssteuerungs-Vorrichtung (21) an dem Kabel (20) installiert ist,
der Konus (21) parallel zu dem Kabel ist, und das spitze Ende des Konus (21) in Richtung des ersten Endes (2a) des Isolier-Gehäuses (2) zeigt,
im Inneren des Isolier-Gehäuses (2) ein Metallrohr (5) befestigt ist, wobei sich das Metallrohr (5) von dem ersten Ende (2a) des Isolier-Gehäuses (2) zu einem Punkt zwischen dem ersten Ende (2a) und dem zweiten Ende (2b) des Isolier-Gehäuses (2) erstreckt,
eine Buchse (7) in einen Teil des Isolier-Gehäuses (2) integriert ist, der an das zweite Ende (2b) des Isolier-Gehäuses (2) angrenzt, wobei die Buchse (7) einen konischen Teil (8) sowie eine Spannungs-Ablenkeinrichtung (7a) der Buchse umfasst und die Spannungs-Ablenkeinrichtung (7a) der Buchse in Kontakt mit dem Metallrohr (5) ist,
das obere Ablenkelement (21a) und die Spannungs-Ablenkeinrichtung (7a) der Buchse (7) einander überlappen, und eine Innenfläche des konischen Teils (8) der Buchse (7) und das untere Ablenkelement (21b) eine kritische Schnittstelle (31) bilden und sich überlappen, wenn das Kabel (20) vollständig in die Kabelabschluss-Vorrichtung (1) eingeführt ist.

2. Kabelabschluss-Vorrichtung (1) nach Anspruch 1, wobei zwischen der Innenfläche (4) des Isolier-Gehäuses (2) und der Außenfläche (6) des Metallrohrs (5) ein Raum vorhanden ist.

3. Kabelabschluss-Vorrichtung (1) nach Anspruch 2, wobei der Raum zwischen der Innenfläche (4) des Isolier-Gehäuses (2) und der Außenfläche (6) des Metallrohrs (5) mit einem elektrisch isolierenden Schaum (10) gefüllt ist.

4. Kabelabschluss-Vorrichtung (1) nach Anspruch 3, wobei der elektrisch isolierende Schaum (10) Polyurethanschaum ist.

5. Kabelabschluss-Vorrichtung (1) nach einem der Ansprüche 1 bis 4, wobei ein Teil des Innenvolumens der Buchse (7) einen Zylinder (9) bildet, ein anderer Teil des Innenvolumens der Buchse (7) den konischen Teil (8) bildet, und ein Ende mit dem kleineren Durchmesser (8a) in Richtung des Metallrohrs (5) zeigt.

6. Kabelabschluss-Vorrichtung (1) nach einem der Ansprüche 1 bis 5, wobei die Buchse (7) Ethylen-Propylen-Dien-(Monomer) (EPDM) umfasst.

7. Kabelabschluss-Vorrichtung (1) nach einem der Ansprüche 1 bis 5, wobei die Buchse (7) Silikon umfasst.

8. Kabelabschluss-Vorrichtung (1) nach einem der vorangehenden Ansprüche, wobei das Metallrohr (5) und die Buchse (7) zum Einführen eines peripheren Endes des Kabels (20) ausgebildet sind.

9. Kabelabschluss-Vorrichtung (1) nach Anspruch 3, wobei das Metallrohr (5) als ein Kühlkörper ausgebildet ist.

10. Kabelabschluss-Vorrichtung (1) nach einem der vorangehenden Ansprüche, wobei das Metallrohr (5) aus Aluminium besteht.

11. Kabelabschluss-Vorrichtung (1) nach einem der vorangehenden Ansprüche, wobei das Metallrohr (5) mit einer Beschichtung behandelt ist, um Absorption von Wärmestrahlung zu erhöhen.

## Revendications

1. Dispositif de terminaison de câble destiné à être monté au niveau d'un câble (20), le dispositif de terminaison de câble (1) comprenant :
un boîtier d'isolateur (2) avec une première extrémité (2a) et une deuxième extrémité (2b), et
un dispositif de commande de contrainte (21),
dans lequel le dispositif de commande de contrainte (21) comprend un cône et est pourvu d'un élément déflecteur supérieur (21a) et d'un élément déflecteur inférieur (21b) pour commander un champ électrique, l'élément déflecteur supérieur (21a) et l'élément déflecteur inférieur (21b) étant formés comme des parties séparées,
dans lequel le dispositif de commande de contrainte (21) est configuré pour être situé dans le boîtier d'isolateur (2) et pour être installé au niveau du câble (20), et
dans lequel, lorsque le dispositif de commande de contrainte (21) est installé au niveau dudit câble (20), ledit cône (21) est parallèle au câble, et l'extrémité en forme de bec dudit cône (21) pointe vers la première extrémité (2a) du boîtier d'isolateur (2),
dans lequel à l'intérieur du boîtier d'isolateur (2) un tuyau métallique (5) est fixé, moyennant quoi le tuyau métallique (5) s'étend depuis la première extrémité (2a) du boîtier d'isolateur (2) jusqu'à un point entre la première extrémité (2a) et la deuxième extrémité (2b) du boîtier d'isolateur (2),
dans lequel une douille (7) est intégrée dans une partie du boîtier d'isolateur (2) qui est adjacente à la deuxième extrémité (2b) du boîtier d'isolateur (2), ladite douille (7) comprenant une partie conique (8) et un déflecteur de contrainte de douille (7a), le déflecteur de contrainte de douille (7a) étant en contact avec le tuyau métallique (5),
dans lequel l'élément déflecteur supérieur (21a) et le déflecteur de contrainte (7a) de la douille (7) se chevauchent, et dans lequel une surface interne de la partie conique (8) de la douille (7) et l'élément déflecteur inférieur (21b) forment une interface critique (31) et se chevauchent lorsque le câble (20) est entièrement inséré dans le dispositif de terminaison de câble (1).

2. Dispositif de terminaison de câble (1) selon la revendication 1, dans lequel un espace est prévu entre la surface interne (4) du boîtier d'isolateur (2) et la surface externe (6) du tuyau métallique (5).

3. Dispositif de terminaison de câble (1) selon la revendication 2, dans lequel l'espace entre la surface interne (4) du boîtier d'isolateur (2) et la surface externe (6) du tuyau métallique (5) est rempli d'une mousse électriquement isolante (10).

4. Dispositif de terminaison de câble (1) selon la revendication 3, dans lequel la mousse électriquement isolante (10) est une mousse de polyuréthane.

5. Dispositif de terminaison de câble (1) selon l'une des revendications 1 à 4, dans lequel une partie du volume intérieur de la douille (7) forme un cylindre (9) et une autre partie du volume intérieur de la douille (7) forme la partie conique (8), où une extrémité avec le plus petit diamètre (8a) pointe vers le tuyau métallique (5).

6. Dispositif de terminaison de câble (1) selon l'une des revendications 1 à 5, dans lequel la douille (7) comprend un monomère d'éthylène-propylène-diène (EPDM).

7. Dispositif de terminaison de câble (1) selon l'une des revendications 1 à 5, dans lequel la douille (7) comprend du silicone.

8. Dispositif de terminaison de câble (1) selon l'une des revendications précédentes, dans lequel le tuyau métallique (5) et la douille (7) sont formés pour insérer une extrémité périphérique du câble (20).

9. Dispositif de terminaison de câble (1) selon la revendication 3, dans lequel le tuyau métallique (5) est formé comme un dissipateur thermique.

10. Dispositif de terminaison de câble (1) selon l'une des revendications précédentes, dans lequel le tuyau métallique (5) est réalisé en aluminium.

11. Dispositif de terminaison de câble (1) selon l'une des revendications précédentes, dans lequel le tuyau métallique (5) est traité avec un revêtement pour augmenter l'absorption du rayonnement thermique.
